# EUROPEAN PATENT APPLICATION

(11) **EP 3 127 459 A1**
(43) Date of publication of application: **08.02.2017**
(21) Application number: 16182954.4
(22) Date of filing: 05.08.2016
(51) Int. Cl.: A47J 43/046, A47J 43/07, A47J 19/02, A47J 19/06

(54) **A COVER OF A PROCESSOR FOR FRUITS AND VEGETABLES**

(30) Priority: 06.08.2015 CN 201510474661
(71) Applicant: Lin, Wei-Chih, New Taipei City 235 (TW); Chang, Ya-Chun, New Taipei City 242 (TW); Lien, Chin-Jui, Taichung City 438 (TW); Wong, Lee Keong, 47410 Petaling Jaya Selangor (MY)
(72) Inventor: Lin, Tzu-Nung, 220 New Taipei City (TW)
(74) Representative: Banse & Steglich

(57) **Abstract**

A cover of a processor for fruits and vegetables is connected above a cutter (5). The cover comprises a cover body (2)and a container (3). The cover body (2) has a feed tube (21). The feed tube (21) has an accommodating space (23) running through vertically. A first positioning element (24) is disposed on an outer circumference of the feed tube (21). The cover body (2) having a water inlet hole (25) through which the accommodating space (23) is in communication with an outside of the cover body (2). A second positioning element (31) correspondingly connected with the first positioning element (24) disposed on a side of the container (3), so that the container (3) and the feed tube (21) are connected with each other. A water outlet end (32) is disposed at a bottom of the container (3) for correspondingly being communication with the water inlet hole (25); thereby, water in the container (3) flows from the water outlet end (32) into the accommodating space (23) through the water inlet hole (25).

## Description

### Field of the invention

The present invention relates to a cover of a processor for fruits and vegetables, and more particularly to a cover of a processor for fruits and vegetables for effectively controlling the juice concentration.

### Background of the invention

Different types of processors are available in the market for grinding, cutting and making juice from fruits, vegetables and leguminous crops for people to intake nutrients. A common processor mainly comprises a container with an opened top and a cutter disposed on a bottom of the container. The cutter rotating under a high speed cuts and blends the foods, fruits and vegetables placed inside the container by using a motor. The food nutrients are rapidly oxidized under the high speed cutting, and therefore the food nutritive value is lost easily. Furthermore, the grinded food fiber, fruit peel and seeds are difficult to be decomposed into water soluble fiber and thus are difficult for swallowing and absorbing by human body. Even though the above-mentioned problems can be solved by reducing the motor rotational speed, the foods, fruits and vegetables cannot be grinded thoroughly. Therefore, some processors employ top and bottom corresponding grinding discs for grinding after the foods have been cut under low rotational speed.

For leguminous crops or fruits and vegetables with less water content, users usually add water into the container from the container top when the cutter or grinding discs are rotating. In order that the cutting and grinding are carried out more evenly and effectively, and the fruits, vegetables and leguminous crops can be mixed more thoroughly. However, adding water this way does not allow effective control of the juice concentration. The juice will be either too diluted or concentrated.

### Summary of the invention

In view of the above drawback, a cover of a processor for fruits and vegetables of the present invention is provided with structures and techniques different from the conventional ones.

A primary objective of the present invention is to provide a cover of a processor for fruits and vegetables composed of a container connected with a side of a feed tube so that water in the container can flow into an accommodating space for solving the problem of unable to control the juice concentration effectively which the conventional fruits and vegetables processors have.

In order to achieve the above-mentioned objectives, a cover of a processor for fruits and vegetables of the present invention is provided for connecting above a cutter. The cover comprises a cover body and a container. The cover body has a feed tube. The feed tube has an accommodating space running through vertically. A first positioning element is disposed on an outer circumference of the cover body. The cover body having a water inlet hole through which the accommodating space is in communication with an outside of the cover body. A second positioning element correspondingly connected with the first positioning element is disposed on a side of the container so that the container and the feed tube are connected with each other. A water outlet end is disposed at a bottom of the container for correspondingly being in communication with the water inlet hole. Thereby, water in the container flows from the water outlet end into the accommodating space through the water inlet hole.

When the cover of a processor for fruits and vegetables is embodied, a control valve is further disposed on the bottom of the container for controlling the outlet water volume of the water outlet end.

When the cover of a processor for fruits and vegetables is embodied, the cutter comprises a cutter set and a grinder set. The grinder set comprises an upper grinding disc and a lower grinding disc disposed correspondingly to each other. The upper grinding disc is connected to a bottom of the cover body. The lower grinding disc and the cutter set are concentrically disposed on a top of a same disc.

When the cover of a processor for fruits and vegetables is embodied, the water inlet hole is disposed above an inner side of the upper grinding disc.

The present invention will become more fully understood by reference to the following detailed description thereof when read in conjunction with the attached drawings.

### Brief description of drawings

Fig. 1 is a perspective explosive view of a cover of a processor for fruits and vegetables according to a preferred embodiment of the present invention;
Fig. 2 is a perspective view of the cover of a processor for fruits and vegetables according to the preferred embodiment of the present invention;
Fig. 3 is a sectional view of the cover of a processor for fruits and vegetables according to the preferred embodiment of the present invention; and
Fig. 4 is an illustrative view of the cover of a processor for fruits and vegetables according to the preferred embodiment of the present invention.

### Detailed Descriptions of Preferred Embodiments

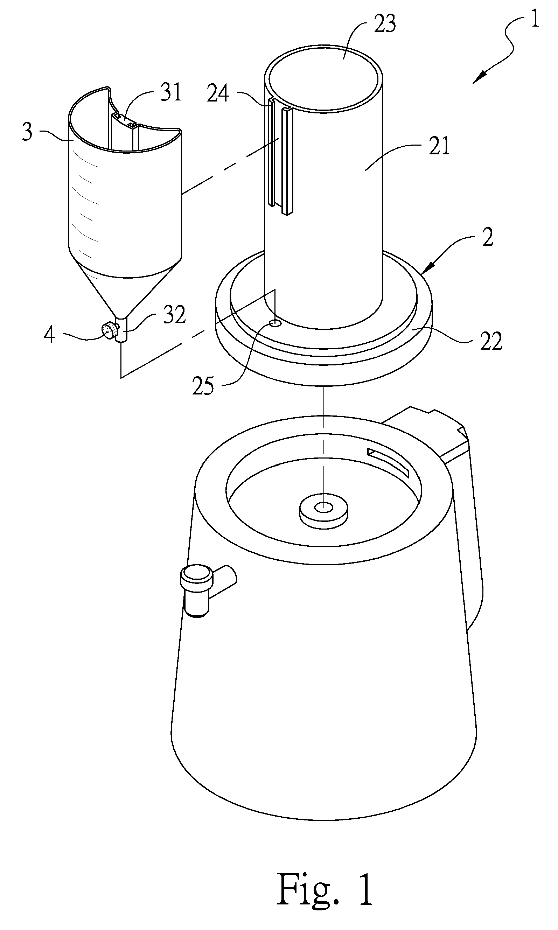

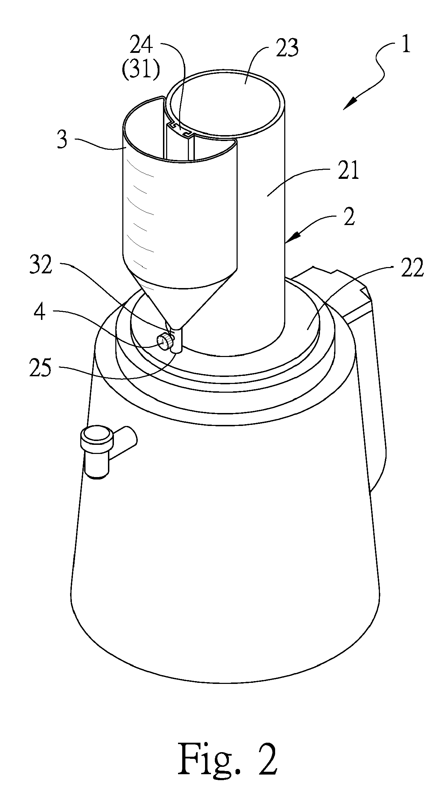

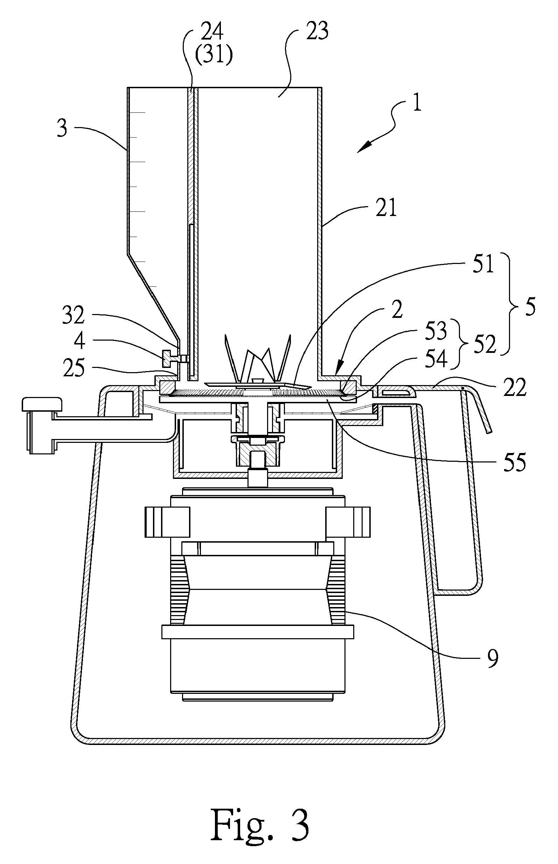

Please refer to Figs. 1 to 3 for a cover of a processor for fruits and vegetables 1 according to a preferred embodiment of the present invention. The cover 1 comprises a cover body 2, a container 3 and a control valve 4.

The cover body 2 is connected above a cutter 5. The cutter 5 comprises a cutter set 51 and a grinder set 52. The grinder set 52 comprises an upper grinding disc 53 and a lower grinding disc 54 disposed correspondingly to each other. The upper grinding disc 53 is connected to a bottom of the cover body 2. The lower grinding disc 54 and the cutter set 51 are concentrically disposed on a top of a same disc 55. A bottom of the cutter 5 is connected with a motor 9. When the motor 9 rotates, the cutter set 51 and the grinder set 52 rotate synchronically to perform cutting.

The cover body 2 has a vertical feed tube 21 and a flange 22 extended outwardly from a bottom of the feed tube 21. The feed tube 21 has a rough cylindrical accommodating space 23 running through vertically. A vertical and elongated guiding groove is disposed on a side of an outer circumference of the feed tube 21. The elongated guiding groove is used as a first positioning element 24. A water inlet hole 25 is disposed on the flange 22. The water inlet hole 25 is in communication with the accommodating space 23 of the feed tube 21 and the outside of the cover body 2. The water inlet hole 25 is disposed above an inner side of the upper grinding disc 53. When the cover of a processor for fruits and vegetables 1 is embodied, the water inlet hole 25 is also disposed on a circumference of the bottom of the feed tube 21 for being communication with the accommodating space 23 of the feed tube 21 and the outside of the cover body 2.

A top of the container 3 is formed as an opening. An accommodating space is formed inside the container 3. A vertical and elongated guiding rail is disposed on a side of the container 3 for inserting downwardly into the elongated guiding groove. The container 3 is connected and positioned on a side of the feed tube 21. The elongated guiding rail is used as a second positioning element 31. When the cover of a processor for fruits and vegetables 1 is embodied, the first positioning element 24 is also an elongated guiding rail, and the second positioning element 31 is also an elongated guiding groove; or the first positioning element 24 is a hanger ring, and the second positioning element 31 is a hanger hook for connecting the container 3 with the feed tube 21. A water outlet end 32 is disposed at a bottom of the container 3 for correspondingly being in communication with the water inlet hole 25. The control valve 4 is connected to the bottom of the container 3 and is disposed on a water outlet tube of the water outlet end 32 for controlling the volume of water in the container 3 flowing from the water outlet end 32 into the accommodating space 23 through the water inlet hole 25.

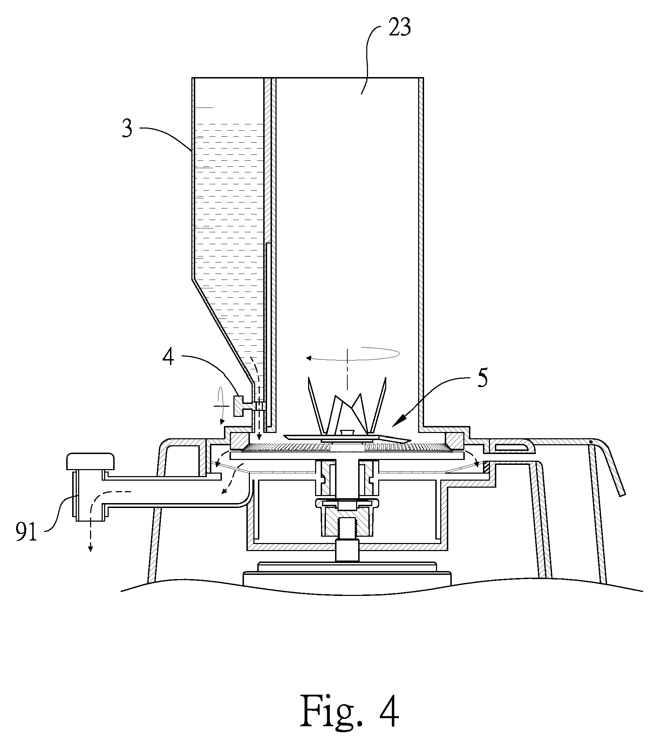

Thereby, as shown in Fig. 4, a user places fruits, vegetables and leguminous crops into the accommodating space 23, and opens the control valve 4 for enabling the water in the container 3 to flow into the accommodating space 23. Therefore, the fruits, vegetables and leguminous crops can be easily turned, cut and grinded by using the cutter 5, and the fruits, vegetables and leguminous crops in juice or mashed form with effectively controlled concentration flows out downwardly from a juice outlet 91.

Therefore, the cover of a processor for fruits and vegetables of the present invention has the following advantages:
1. The container is connected on a side of the feed tube and the water in the container can flow into the accommodating space. Thus, leguminous crops or fruits and vegetables with less water content can be turned and cut more easily and smoothly because of the added water. Because the water volume in the container filled into the accommodating space is under control when the grinding is in process, the juice concentration can be effectively controlled for fitting different requirements of users.
2. The container of the present invention is detachably connected on a side of the feed tube. Therefore, the container can be installed or uninstalled according to the user's requirements. In conclusion, maximum flexibility is provided.

According to the above disclosure, the cover of a processor for fruits and vegetables of the present invention can achieve the expected objectives by enabling easy turning and cutting of fruits, vegetables and leguminous crops and effectively controlling the juice concentration.

Although the embodiments of the present invention have been described in detail, many modifications and variations may be made by those skilled in the art from the teachings disclosed hereinabove. Therefore, it should be understood that any modification and variation equivalent to the spirit of the present invention be regarded to fall into the scope defined by the appended claims.

## Claims

1. A cover of a processor for fruits and vegetables, connecting above a cutter, the cover comprising:
a cover body having a feed tube, the feed tube having an accommodating space running through vertically, a first positioning element being disposed on an outer circumference of the feed tube, the cover body having a water inlet hole through which the accommodating space is in communication with an outside of the cover body; and
a container, a second positioning element being disposed on a side of the container for correspondingly connecting with the first positioning element, so that the container and the feed tube being connected with each other, a water outlet end being disposed at a bottom of the container for correspondingly being communication with the water inlet hole, so that water in the container flowing from the water outlet end into the accommodating space through the water inlet hole.

2. The cover of a processor as claimed in Claim 1, wherein a control valve is further disposed on the bottom of the container for controlling the outlet water volume of the water outlet end.

3. The cover of a processor as claimed in Claim 2, wherein the cutter comprises a cutter set and a grinder set, the grinder set comprises an upper grinding disc and a lower grinding disc disposed correspondingly to each other, the upper grinding disc is connected to a bottom of the cover body, and the lower grinding disc and the cutter set are concentrically disposed on a top of a disc.

4. The cover of a processor as claimed in Claim 3, wherein the water inlet hole is disposed above an inner side of the upper grinding disc.

5. The cover of a processor as claimed in Claim 1, wherein the cutter comprises a cutter set and a grinder set, the grinder set comprises an upper grinding disc and a lower grinding disc disposed correspondingly to each other, the upper grinding disc is connected to a bottom of the cover body, and the lower grinding disc and the cutter set are concentrically disposed on a top of a disc.

6. The cover of a processor as claimed in Claim 5, wherein the water inlet hole is disposed above an inner side of the upper grinding disc.
